# EUROPÄISCHE PATENTSCHRIFT

(11) **EP 0 339 263 B1**
(45) Veröffentlichungstag und Bekanntmachung des Hinweises auf die Patenterteilung: **04.08.1993**
(21) Anmeldenummer: 89105124.5
(22) Anmeldetag: 22.03.1989
(51) Int. Cl.: G01N 29/04

(54) **Vorrichtung zur Detektion von Lunkern, Delaminationen und Inhomogenitäten**
Apparatus for detecting shrink holes, delamination and inhomogeneities
Appareil pour la détection de retassures, de délaminations et d'inhomogénéités

(30) Priorität: 27.04.1988 DE 3814172
(43) Veröffentlichungstag der Anmeldung: 02.11.1989
(73) Patentinhaber: BATTELLE INGENIEURTECHNIK GmbH, D-60486 Frankfurt (DE)
(72) Erfinder: Weiss, Rainer, Dipl.-Ing., D-6234 Hattersheim (DE)
(74) Vertreter: Reichel, Wolfgang, Dipl.-Ing.

(56) Entgegenhaltungen:
- WO-A-87/07378
- DE-B- 2 047 930
- FR-A- 2 133 283
- GB-A- 2 136 569
- US-A- 4 479 386
- MEASUREMENT TECHNIQUES Band 28, Nr. 3, März 1985, Seite 232-235, Elmont, NY, US; Y.V. IVANOV et al.: "Arrangement for Analyzing the Impact Spactrum of Vibratory Impact Pulses"

## Beschreibung

Die Erfindung bezieht sich auf eine Vorrichtung Zur Prüfung von Werkstoffen mittels eines Sensors, der von einem Anregungssystem in Schwingung versetzt wird, wobei die vom Sensor erfassten Signale als Meßgrößen dienen.

Es ist bereits eine Vorrichtung der eingangs aufgeführten Art bekannt (US-PS 4,519,245), die aus einem in einer Halterung aufgenommenen Hammer besteht, der mittels eines Anregungssystems in Richtung einer Oberfläche des zu prüfenden Werkstoffes beschleunigt wird. Zwischen dem oberen Ende des Hammers und der Halterung befindet sich eine Druckfeder, die die Aufgabe hat, den Hammer in Richtung der Oberfläche zu beschleunigen. Der wesentliche Nachteil dieses Messverfahrens besteht darin, daß die Prüfgeschwindigkeit zu gering ist, die Fehlerdetektion nur im eingeschränkten Maße und die Fehlerunterscheidung gar nicht möglich ist. Ferner hängt die Fehlerdetektion von der Aufmerksamkeit und der Erfahrung der Prüfperson ab.

Dieser Nachteil wird in der Vorrichtung der WO 87/07 378 vermieden, in der zur impulsförmigen Anregung mindestens ein Hammer angehoben und mittels einer dadurch gespannten Feder gegen die zu prüfende Oberfläche gestoßen wird. Es sind mehrere hiervon unabhängige Aufnehmer z.B. in Form von Geophonen vorgesehen, die über Entkopplungselemente in einem Chassis gehaltert sind, das wiederum über Entkopplungselemente (Federn) an einer Halteplatte gehaltert ist, die auch mindestens ein Anregungssystem mit Hammer trägt. Die Signale der Aufnehmer werden fouriertransformiert und unter Bildung einer Übertragungsfunktion, Aufteilung in Frequenzbänder usw. weiterverarbeitet.

In dieser Anordnung, in der das Anregungssystem und die Aufnehmer getrennt sind, ist keine hohe Prüfgeschwindigkeit erzielbar. Ferner muß das Referenzmuster der Fehler bekannt sein und der zu erfassende Defekt muß in mindestens einem festgelegten Frequenzband eine Änderung hervorrufen.

In der US 4 479 386 wird ein Hammer auf einen auf einem Hammerkopf befestigten Kraftaufnehmer geschlagen. Um eine gleichmäßige Kraft zu erzielen, wird der Schlag durch eine Federvorspannung vorgegeben. Da stets neu vorzuspannen ist, kann auch hier keine hohe Prüfgeschwindigkeit erzielt werden. Bei unterschiedlicher Härte der zu prüfenden Oberfläche ist es schwierig, durch angepaßte Vorgabe der Federspannung eine zuverlässige Fehlerdetektion zu garantieren.

Der vorliegenden Erfindung liegt die Aufgabe zugrunde, eine verläßliche Detektion von Lunkern, Delaminationen und Inhomogenitäten mit möglichst hoher Prüfgeschwindigkeit zu ermöglichen, wobei keine Einschränkungen des Einsatzbereiches durch die Härte oder extreme Weichheit der zu prüfenden Teile eintreten soll.

Diese Aufgabe wird durch die kennzeichnenden Merkmale des Patentanspruchs 1 gelöst. Danach umfaßt das Anregungssystem ein stangenförmiges Verbindungselement und eine Anregungseinrichtung. Der Sensor ist gemeinsam mit einem vom Anregungssystem in Schwingung versetzten Hammerkopf an einer Halterung befestigt, wobei zwischen dem Sensor und dem zur Aufnahme des Sensors dienenden stangenförmigen Verbindungselement ein Entkopplungselement vorgesehen ist.

Durch die Verwendung des Entkopplungselementes zwischen dem Sensor und dem stangenförmigen Element des Anregungssystems ist die Empfindlichkeit der Vorrichtung zur Prüfung eines Werkstoffs wesentlich gesteigert. Die Verwendung des Entkopplungselementes gestattet ferner eine Erhöhung der Prüfgeschwindigkeit, da aufgrund der erfindungsgemäßen Anordnung die Masse der zu bewegenden Teile wesentlich reduziert werden kann.

Es ist vorteilhaft, das Entkopplungselement als Federelement auszubilden. In vorteilhafter Weise bilden der Sensor und das Federelement ein resonant schwingendes System. Hierdurch ist die Empfindlichkeit der Vorrichtung weiter verbessert. Da das System als resonant schwingendes System ausgebildet ist, haben lokale Höhenunterschiede in der Oberfläche des zu prüfenden Materials geringe Einflüsse auf die Meßgenauigkeit.

Das stangenförmiges Verbindungselement besteht vorzugsweise aus einem Anker. Eine Kurbel- oder Kolbenstange ist z.B. ebenfalls möglich. Die Anregungseinrichtung kann aus mindestens einer Anregungsspule bestehen, mit der ein Anker in Schwingung versetzt wird. Ferner sind Motoren mit Exzenterscheibe oder Druckluftmotoren in Verbindung mit Kurbel- oder Kolbenstangen als Anregungssysteme möglich.

In weiterer Ausgestaltung der Erfindung ist es vorteilhaft, daß das vom Sensor aufgenommene Signal einem Auswertungssystem zugeführt wird, das einen Spitzenwertdetektor, einen Mittelwertbildner, einen Pulsbreitenerkenner und einen Doppelpulserkenner aufweist. Hierzu ist es vorteilhaft, daß die einzelnen Meßgrößen einem Vergleicher und das Ergebnis einem Verknüpfer zugeführt werden, wobei die aus dem Verknüpfer austretenden Daten einer Anzeige zugeführt werden. Hierdurch wird auf einfache Weise die Auswertung der Signale und somit eine genaue Ortung der Fehler im Werkstoff in kürzester Zeit möglich.

Im folgenden wird die Erfindung anhand von mehreren Ausführungswegen darstellenden Zeichnungen näher erläutert. Es zeigen:
- Fig. 1: eine Vorrichtung zur Prüfung von Werkstoffen mit einem Sensor und einem zugehörigen Anregungssystem,
- Fig. 2: ein weiteres Ausführungsbeispiel einer Vorrichtung zur Prüfung von Werkstoffen mit einer über einem Motor angetriebenen Exzenterscheibe,
- Fig. 3: ein drittes Ausführungsbeispiel einer Vorrichtung zur Prüfung von Werkstoffen mit einem Kolbenmotor, der über Druckluft antreibbar ist,

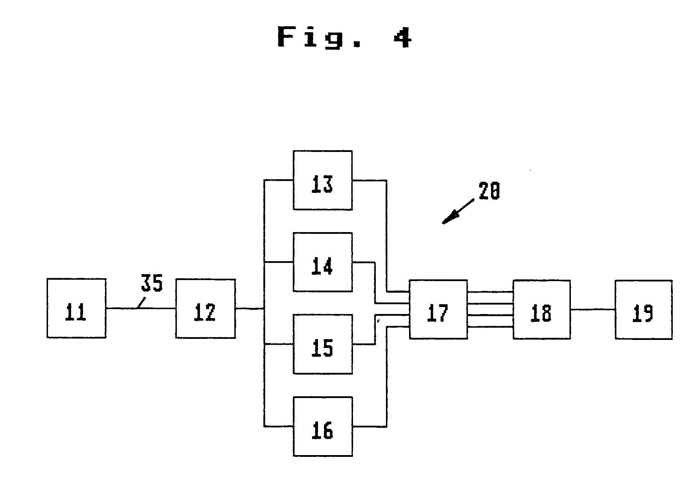

- Fig. 4: ein Blockschaltbild eines Auswertungssystems.

In der Zeichnung ist mit 11 ein Sensorkopf einer Vorrichtung zur Prüfung von Werkstoffen bezeichnet, zu dem ein Sensor 1 gehört, der an einer Halterung 8 befestigt ist. Der Sensor kann in vorteilhafterweise als Luftschall oder Körperschallsensor oder als Beschleunigungsaufnehmer ausgebildet sein. An der Unterseite der Halterung 8 befindet sich ein Hammerkopf 9, der frei schwingen kann und mit dem die Oberfläche eines zu prüfenden Werkstoffes 10 kontinuierlich angeschlagen werden kann. Zwischen der Unterseite des Hammerkopfes 9 und der Oberfläche des Werkstoffes 10 befindet sich eine Führung 6, die dazu dient, einen konstanten Abstand zwischen der Spitze des Hammerkopfes 9 und der Oberfläche des Werkstoffes 10 zu gewährleisten.

Der Hammerkopf 9 mit der Halterung 8 ist mittels eines Federelementes 2, das als Entkopplungselement ausgebildet ist, an einen Anker 4 angeschlossen, der in einer Halterung 21 aufgenommen ist. Im Bereich des Ankers 4 befinden sich eine oder mehrere Anregungsspulen 5. Die Anregungsspulen 5 sowie der Anker 4 bilden ein Anregungssystem, mittels der der Hammerkopf 9 in Schwingung versetzt werden kann.

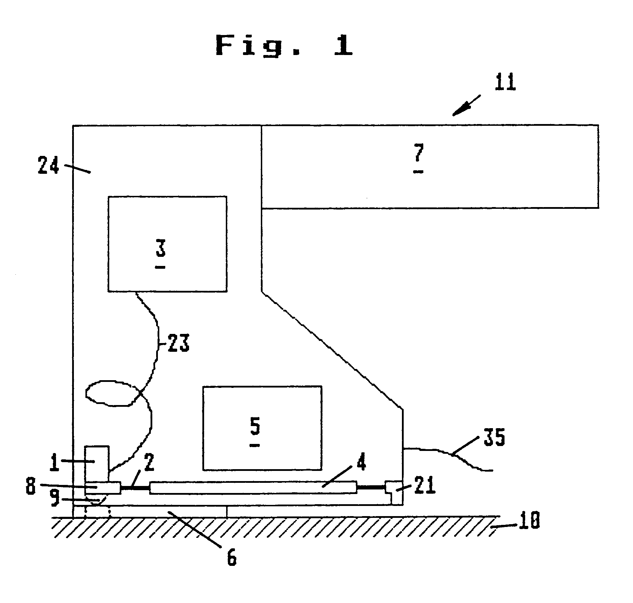

Der in Fig. 1 dargestellte Sensor 1 ist über eine elektrische Leitung 23 an einen Verstärker 3 angeschlossen. Das Anregungssytem mit dem Sensor 1 und dem Hammerkopf 9 sowie dem Verstärker 3 sind in einem Gehäuse 24 aufgenommen, an dem ein Handgriff 7 angeordnet ist, der zur Handhabung des Sensorkopfes 11 dient.

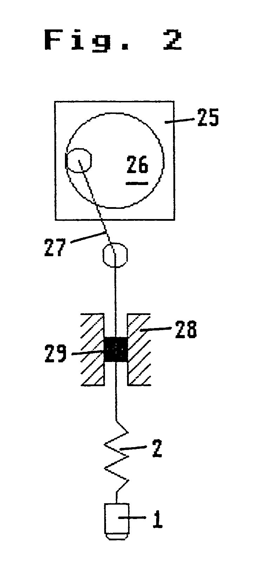

In Fig. 2 ist ein weiteres Ausführungsbeispiel einer Vorrichtung zur Prüfung von Werkstoffen dargestellt, die aus einem Motor 25 mit einer Exzenterscheibe 26 besteht, an dem eine Kurbelstange 27 angeordnet ist, die mit einem in einer Führung 28 aufgenommenen Kolben verbunden ist. An dem Kolben 29 ist die Feder 2 angeschlossen, die als Entkopplung zwischen dem Kolben 29 und dem Sensor 1 dient.

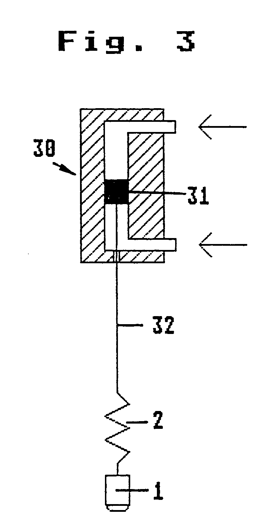

In Fig. 3 ist ein drittes Ausführungsbeispiel zur Prüfung und zur Messung von Werkstoffen dargestellt, zu der ein Druckluftkolbenmotor 30 gehört, der einen Kolben 31 aufweist, an dessen Kolbenstange 32 die Feder 2 angeschlossen ist, die wiederum mit dem Sensor 1 in Verbindung steht.

Der in Fig. 1 dargestellte Sensorkopf 11 steht über eine elektrische Leitung 35 mit einem Filter und Verstärker 12 in Verbindung, an den ein Spitzenwertdetektor 13, ein Mittelwertbildner 14, ein Pulsbreitenerkenner 15 sowie ein Doppelpulserkenner 16, angeschlossen sind.

Die aus dem Filter bzw. aus dem Verstärker 12 austretenden Impulse werden dem Spitzenwertdetektor 13, dem Mittelwertbildner 14, dem Pulsbreitenerkenner 15 sowie dem Doppelpulserkenner 16 zugeführt.

Der Spitzenwertdetektor 13 ermittelt jeweils den maximalen Ausschlag eines Impulses und speichert diesen bis zur Erfassung des nächsten Spitzenwertes. Mittels des Mittelwertbilderns 14 werden die maximalen Ausschläge des Spitzenwertdetektors 13 über eine Anzahl von Impulsen gemittelt. Der Pulsbreitenerkenner 15 hat die Aufgabe, die Pulsdauer jedes einzelnen Impulses zu ermitteln. Mittels des Doppelpulserkenners 16 wird die Abweichung des Kurvenverlaufes von einer Normalkurve ermittelt, die auftreten würde, wenn kein Fehler im Werkstoff vorhanden ist. Die aus dem Spitzenwertdetektor 13, den Mittelwertbildner 14, dem Pulsbreitenerkenner 15 sowie dem Doppelpulserkenner 16, austretenden Daten, werden dem Vergleicher 17 zugeführt und dort mit vorgegebenen Schwellwerten verglichen, die im einzelnen beliebig vorgewählt werden können. Die aus dem Vergleicher 17 vorliegenden Vergleichsdaten werden anschließend einem Verknüpfer 18 zugeführt und dann einer Anzeige 19, mittels der die unterschiedlichen Fehler wiedergegeben werden. An den Vergleicher 17 kann beispielsweise auch ein Rechner angeschlossen werden, der dann zur Einstellung der Schwellwerte benutzt werden kann. Wird mittels des auf die Oberfläche des Werkstoffes 10 ein Fehler detektiert, so wird über das Auswertungssystem 20 eine Farbmarkierung an der ausgeschlagenen Stelle auf den Werkstoff 10 vorgenommen, so daß anschließend eine leichte Fehlerauffindung möglich ist.
- 1: Sensor
- 2: Federelement
- 3: Verstärker
- 4: Anker
- 5: Anregungssystem
- 6: Führung
- 7: Handgriff
- 8: Halterung
- 9: Hammerkopf
- 10: Werkstoff
- 11: Sensorkopf
- 12: Filter und Verstärker
- 13: Spitzenwertdetektor
- 14: Mittelwertbildner
- 15: Pulsbreitenerkenner
- 16: Doppelpulserkenner
- 17: Vergleicher
- 18: Verknüpfer
- 19: Anzeige
- 20: Auswertungssystem
- 21: Halterung
- 22:
- 23: elektrische Leitung
- 24: Gehäuse
- 25: Motor
- 26: Exzenterscheibe
- 27: Kurbelstange
- 28: Führung
- 29: Kolben
- 30: Druckluftkolbenmotor
- 31: Kolben
- 32: Kolbenstange
- 33:
- 34:
- 35: elektr. Leitung
- 36:
- 37:
- 38:
- 39:
- 40:

## Patentansprüche

1. Vorrichtung zur Prüfung von Werkstoffen (10) mittels eines Sensors (1), der von einem Anregungssystem (5,4; 25,26,27; 30,31,32) in Schwingung versetzt wird, wobei die vom Sensor (1) erfaßten Signale als Meßgrößen dienen,
und das Anregungssystem aus einem Anregungseinrichtung (5; 25,26; 30,31) und einem stangenförmigen Verbindungselement (4; 27; 32) besteht, dadurch gekennzeichnet
daß der Sensor (1) und ein vom Anregungssystem in Schwingung versetzter Hammerkopf (9) an einer gemeinsamen Halterung (8) befestigt sind und
daß zwischen dem Sensor (1) und dem zu dessen Aufnahme dienenden stangenförmigen Verbindungselement (5; 27; 32) ein Entkopplungselement (2) vorgesehen ist.

2. Vorrichtung nach Anspruch 1,
dadurch gekennzeichnet,
daß das stangenförmige Verbindungselement aus einem Anker (4), aus einer Kurbelstange (27) oder einer Kolbenstange (32) besteht und
daß die Anregungseinrichtung aus mindestens einer Anregungsspule (5), aus einem Motor (25) mit Exzenterscheibe (26) oder aus einem Druckluftmotor (30) mit Kolben (31) besteht.

3. Vorrichtung nach Anspruch 2, dadurch gekennzeichnet, daß das Entkopplungssystem als Federelement (2) ausgebildet ist.

4. Vorrichtung nach Anspruch 1 bis 2, dadurch gekennzeichnet, daß der Sensor (1) und das Federelement (2) ein resonant schwingendes System bilden.

5. Vorrichtung nach Anspruch 1, dadurch gekennzeichnet, daß das vom Sensor (1) aufgenommene Signal einem Auswertungssystem (20) zugeführt wird, das einen Spitzenwertdetektor (13), einen Mittelwertbildner (14), einen Pulsbreitenerkenner (15) und einen Doppelpulserkenner (16) aufweist.

6. Vorrichtung nach Anspruch 5, dadurch gekennzeichnet, daß die einzelnen Meßgrößen einem Vergleicher (17) und das Ergebnis einem Verknüpfer (18) zugeführt werden, wobei die aus dem Verknüpfer (18) austretenden Daten einer Anzeige (19) zugeführt werden.

## Claims

1. Apparatus for testing materials (10) by means of a sensor (1) which is set in oscillation by an exciter system (5, 4; 25, 26, 27; 30, 31, 32), wherein the signals detected by the sensor serve as measured values and the exciter system consists of an exciter device (5, 25, 26; 30, 31,) and a rod-like coupling element (4; 27; 32), characterized in that the sensor (1) and a hammer head (9) set in oscillation by the exciter system are fixed to a common holder (8) and in that a de-coupling element (2) is provided between the sensor (1) and the coupling element (4; 27; 31) serving to receive the same.

2. Apparatus according to claim 1, characterized in that the rod-like coupling element consists of an armature (4), a crank (27) or a piston rod (32) and in that the exciter device consist of at least one exciter coil (5), a motor (25) with an eccentric (26) or a pneumatic motor (30) with a piston (31).

3. Apparatus according to claim 2, characterized in that the de-coupling system is formed as a spring element (2).

4. Apparatus according to claim 1 or 2, characterized in that the sensor (1) and the spring element (2) form a resonant oscillatory system.

5. Apparatus according to claim 1, characterized in that the signal derived from the sensor (1) is fed to an evaluation system (20), which comprises a peak value detector (13), an averaging device (14), a pulse width detector (15) and a double pulse detector (16).

6. Apparatus according to claim 5, characterized in that the individual measured values are fed to a comparator (17) and the result to a combiner (18), the data from the combiner (18) being fed to a display (19).

## Revendications

1. Appareil pour l'examen de matériaux (10) au moyen d'un détecteur (1) qui est soumis à un mouvement oscillant par un système d'excitation (5, 4 ; 25, 26, 27 ; 30, 31, 32), les signaux captés par le détecteur (1) servant de grandeurs de mesure,
et dans lequel le système d'excitation consiste en un dispositif d'excitation (5 ; 25, 26 ; 30, 31) et en un élément de connexion (4 ; 27 ; 32) en forme de tige, caractérisé en ce que
le détecteur (1) et un mouton (9) soumis à un mouvement oscillant par le système d'excitation sont fixés à un support commun (8), et
en ce qu'il est prévu, entre le détecteur (1) et l'élément de connexion (4 ; 27 ; 32) en forme de tige servant à le soutenir, un élément de découplage (2).

2. Appareil selon la revendication 1, caractérisé en ce que
l'élément de connexion en forme de tige consiste en un induit (4), en une bielle de manivelle (27) ou en une tige de piston (32), et
en ce que le dispositif d'excitation consiste en au moins une bobine d'excitation (5), en un moteur (25) avec disque d'excentrique (26) ou en un moteur à air comprimé (30) avec piston (31).

3. Appareil selon la revendication 2, caractérisé en ce que le système de découplage est configuré en tant qu'élément à ressort (2).

4. Appareil selon la revendication 1 ou 2, caractérisé en ce que le détecteur (1) et l'élément à ressort (2) constituent un système oscillant à résonnance.

5. Appareil selon la revendication 1, caractérisé en ce que le signal capté par le détecteur (1) est fourni à un système d'évaluation (20), qui présente un détecteur de valeur de crête (13), un moyenneur (14), un discriminateur de largeur d'impulsion (15) en un discriminateur d'impulsion double (16).

6. Appareil selon la revendication 5, caractérisé en ce que les grandeurs de mesure individuelles sont fournies à un comparateur (17) et le résultat à un opérateur logique (18), les données sortant de l'opérateur logique (18) étant amenées à un afficheur (19).
